(19)

**Europäisches Patentamt**
**European Patent Office**
**Office européen des brevets**

(11)　**EP 4 454 457 A1**

(12)　# EUROPEAN PATENT APPLICATION

(43) Date of publication:
**30.10.2024　Bulletin 2024/44**

(21) Application number: **23179693.9**

(22) Date of filing: **16.06.2023**

(51) International Patent Classification (IPC):
***A01K 1/015*** *(2006.01)*

(52) Cooperative Patent Classification (CPC):
**A01K 1/0152; A01K 1/0154; A01K 1/0155**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:　**28.04.2023　JP 2023074721**

(71) Applicant: **ShenZhen YUTO Packaging
Technology Co., Ltd.
Shenzhen City, Guangdong 518108 (CN)**

(72) Inventors:
• **MU, Zhengyang
  Shenzhen City, Guangdong, 518108 (CN)**
• **HAN, Guocheng
  Shenzhen City, Guangdong, 518108 (CN)**
• **CHENG, Yanfei
  Shenzhen City, Guangdong, 518108 (CN)**
• **PENG, Yao
  Shenzhen City, Guangdong, 518108 (CN)**
• **HE, Wei
  Shenzhen City, Guangdong, 518108 (CN)**
• **LI, Wenxiu
  Shenzhen City, Guangdong, 518108 (CN)**
• **GUO, Rui
  Shenzhen City, Guangdong, 518108 (CN)**
• **LI, Mengyao
  Shenzhen City, Guangdong, 518108 (CN)**

(74) Representative: **Angerhausen, Christoph
Boehmert & Boehmert
Anwaltspartnerschaft mbB
Pettenkoferstrasse 22
80336 München (DE)**

Remarks:
Amended claims in accordance with Rule 137(2)
EPC.

(54)　**CAT LITTER AND PREPARATION METHOD THEREOF**

(57)　The present application provides a cat litter and a preparation method thereof. The cat litter comprising the following components: 100 parts by weight of a plant fibrous waste, 1-7 parts by weight of a bacteriostat, 1-34 parts by weight of a deodorant, 1-27 parts by weight of an adsorbent, 1-47 parts by weight of a binder, 1-94 parts by weight of a water absorbent, and 20-80 parts by weight of water, wherein the bacteriostat comprises a mesoporous solid base. The cat litter has a good antibacterial effect, facilitating the healthy growth of pets.

S10
Mixing a plant fibrous waste, water and a part of a bacteriostat, a deodorant, an adsorbent, a binder and a water absorbent to obtain a first mixture

S20
Granulating the first mixture to obtain a first particle

S30
Mixing the remaining part of the bacteriostat, the deodorant, the adsorbent, the binder and the water absorbent to form a second mixture, and coating the first particle with the second mixture to obtain a second particle

S40
Sieving and drying the second particle to obtain the cat litter

Fig. 1

EP 4 454 457 A1

## Description

### TECHNICAL FIELD

This application relates to the technical field of a cat litter, in particular to a cat litter and a preparation method thereof.

### BACKGROUND

A cat litter is a kind of substance used to clean up pet excreta, and can quickly absorb the liquid in the urine and feces and the resulting odor, making the feeding environment clean and fresh. In the process of cleaning up pet waste, if the cat litter is not replaced for a long time, bacteria are easy to grow in the cat litter, which is not conducive to the healthy growth of pets.

In order to solve the problem of easy growth of bacteria in the cat litter caused by not replacing the cat litter for a long time, antibacterial agents are usually added to the raw materials for preparing the cat litter, so as to inhibit the growth of bacteria. However, the antibacterial effect of the current cat litter is still poor, which affects the health of pets.

### SUMMARY

In view of the above technical problems, this application provides a cat litter and a preparation method thereof. The cat litter has good antibacterial effect, facilitating the healthy growth of pets.

In order to solve the above technical problems, this application provides a cat litter comprising the following components:

100 parts by weight of a plant fibrous waste,

1-7 parts by weight of a bacteriostat, wherein the bacteriostat comprises a mesoporous solid base;

1-34 parts by weight of a deodorant,

1-27 parts by weight of an adsorbent,

1-47 parts by weight of a binder;

1-94 parts by weight of a water absorbent, and

20-80 parts by weight of water.

In the technical solution of this application, by reasonable selection of components and their contents, the cat litter has a good antibacterial effect, so as to facilitate the healthy growth of pets. The plant fibrous waste can be recycled, which not only reduces the preparation cost of the cat litter, but also contributes to the environmental protection. Moreover, the mesoporous solid base included in the bacteriostat has a large specific surface area and pore volume, which makes it have a better antibacterial effect.

In some embodiments of the present application, the bacteriostat is 2-6 parts by weight, and/or the deodorant is 3-30 parts by weight, and/or the adsorbent is 2-25 parts by weight, and/or the binder is 5-40 parts by weight of, and/or the water absorbent is 3-85 parts by weight, and/or the water is 26-60 parts by weight.

In some embodiments of the present application, the cat litter further comprises the following component: a fiber softener, wherein the fiber softener is 1-18 parts by weight.

In some embodiments of the present application, the cat litter further comprises the following component: a fresher, wherein the fresher is 1-13 parts by weight.

In some embodiments of the present application, the bacteriostat is 3-6 parts by weight, and/or the deodorant is 6-12 parts by weight, and/or the adsorbent is 3-4 parts by weight, and/or the binder is 11-17 parts by weight, and/or the water absorbent is 5-9 parts by weight, and/or the water is 41-56 parts by weight, and/or the fiber softener is 2-6 parts by weight, and/or the fresher is 4-9 parts by weight.

In some embodiments of the present application, the fiber softener is selected from at least one of fatty acid compounds, fatty acid ester compounds, glycerol compounds, amide compounds and silicone oil compounds; and/or the fresher is selected from an applewood fiber.

In some embodiments of the present application, the mesoporous solid base is selected from a metal oxide and/or a metal hydroxide.

In some embodiments of the present application, the metal oxide is selected from an alkali metal oxide and/or an alkaline earth metal oxide; and the metal hydroxide is selected from an alkali metal hydroxide and/or an alkaline earth metal hydroxide.

In some embodiments of the present application, the plant fibrous waste is selected from at least one of a bagasse fiber, a bamboo fiber, a giant fungus grass fiber, a straw fiber, a bamboo shoot shell fiber, an eulaliopsis binata fiber and a bamboo shoot shell fiber; and/or the bacteriostat comprises at least one of nano-oxide, a solid oxychloride, sorbic acid and a sorbate; and/or the deodorant is selected from at least one of clay, a resin, a plant essential oil, and allophane; and/or the adsorbent is selected from at least one of an activated carbon, a mixture of water and sodium calcium aluminosilicate, diatomite, esterified glucomannan and cholestyramine; and/or the binder is selected from at least one of whey protein, sodium alginate, zein, sodium-based bentonite, carboxymethyl cellulose, sodium polyacrylate, pregelatinized starch and jelly glue; and/or the water absorbent is selected from at least one of an acrylate polymer, an acrylonitrile copolymer, a protein, a thermosetting resin and a barrier resin.

In some embodiments of the present application, the nano-oxide is selected from at least one of nano zinc oxide particles, nano titanium dioxide particles and nano cerium oxide particles; the sorbate is selected from at least one of sodium sorbate and potassium sorbate; the solid oxychloride is selected from chlorine dioxide; and the clay is a modified clay selected from attapulgite and/or nano-montmorillonite modified with amide compounds.

This application also provides a method for preparing the cat litter in any one of the above embodiments, comprising steps of:

mixing a plant fibrous waste, water and a part of a bacteriostat, a deodorant, an adsorbent, a binder and a water absorbent to obtain a first mixture;

granulating the first mixture to obtain a first particle;

mixing the remaining part of the bacteriostat, the deodorant, the adsorbent, the binder and the water absorbent to form a second mixture, and coating the first particle with the second mixture to obtain a second particle; and

sieving and drying the second particle to obtain the cat litter.

In some embodiments of the present application, a compression ratio in the granulating step is 0.5-2.5.

## DESCRIPTION OF THE DRAWINGS

The drawings herein are incorporated into and form part of the specification, show embodiments conforming to this application, and are used together with the specification to explain the principles of this application. In order to more clearly explain the technical solution of the embodiments of this application, the drawings used in the embodiments are briefly introduced. It is obvious for ordinary technicians in the art that, other drawings can be obtained according to these drawings without creative labor.

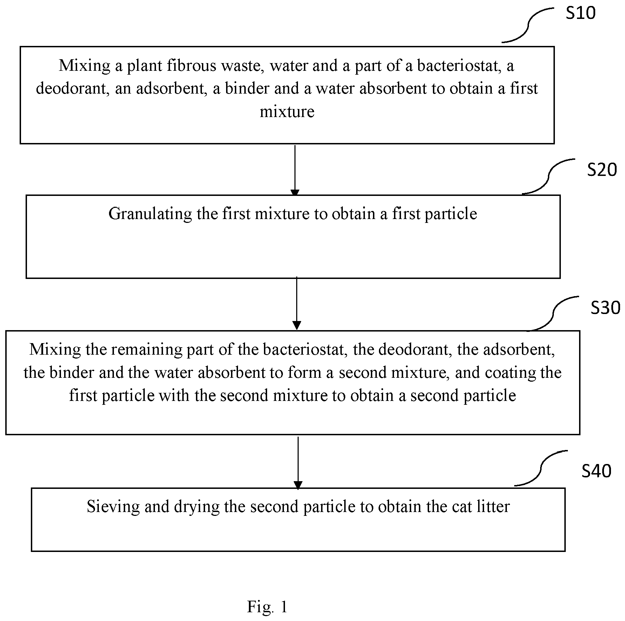

Fig. 1 is a flow diagram of a method for preparing the cat litter of some embodiments of this application.

The purpose, functional characteristics and advantages of this application will be further explained by referring to the drawings in combination with examples. Embodiments of this application have been shown by the drawings and will be described in more detail hereafter. These drawings and descriptions are not intended to limit the scope of the idea of this application in any way, but rather to illustrate the concept of this application for those skilled in the art by reference to particular embodiments.

## DETAILED DESCRIPTION

Each example or embodiment in the specification is described in a progressive manner, and each example focuses on the differences from other examples.

Unless stated otherwise, all technical and scientific terms used herein have the same meaning as commonly understood by one skilled in the art. The terms used herein are only for the purpose of describing specific embodiments and are not intended to limit this application. The terms "comprise/comprising" and "have/having" in the specification and claims, and any variation thereof, are intended to cover non-exclusive inclusion.

In the description of this application, the technical terms "first" and "second" are only used to distinguish different objects and should not be understood to indicate or imply relative importance or to imply the number, specific order or primary or secondary relationship of the technical features. In the description of this application, "more than one" means two or more, unless expressly and specifically stated otherwise.

In the specification, description by reference to the terms such as "an embodiment", "some embodiments", "schematic embodiment", "exemplary", "a specific example", or "some examples" means that specific features, structures, materials, or features described in conjunction with embodiments or examples are included in at least one embodiment or example of this application. In the specification, schematic expressions of the above terms do not necessarily refer to the same embodiments or examples. Moreover, the specific features, structures, materials, or features may be combined in a suitable way in any one or more embodiments or examples.

The present application provides a cat litter comprising a plant fibrous waste, a bacteriostat, a deodorant, an adsorbent, a binder, a water absorbent and water, specifically comprising 100 parts by weight of a plant fibrous waste, 1-7 parts by weight of a bacteriostat, 1-34 parts by weight of a deodorant, 1-27 parts by weight of an adsorbent, 1-47 parts by weight of a binder, 1-94 parts by weight of a water absorbent, and 20-80 parts by weight of water.

In the technical solutions of this application, by reasonable selection of components and their contents, the cat litter has a good antibacterial effect, so as to facilitate the healthy growth of pets. The plant fibrous waste is readily available and can be recycled, which not only reduces the preparation cost of the cat litter, but also contributes to the environmental protection. Moreover, the mesoporous solid base included in the bacteriostat has a large specific surface area and pore volume, which makes it have a better antibacterial effect.

In the embodiments of the present application, the plant fibrous waste is readily available, thereby reducing the difficulty of preparing the cat litter. The waste plant fiber is recycled, reducing the preparation cost of the cat litter and contributing to the environmental protection.

In the embodiments below, the parts by weight of the components included in the cat litter is calculated relative to 100 parts by weight of the plant fibrous waste, unless stated otherwise.

**Plant fibrous waste**

A plant fibrous waste plays a supporting role in the granulation process of the cat litter. In some embodiments of the present application, the plant fibrous waste may be selected from at least one of a bagasse fiber, a bamboo fiber, a giant fungus grass fiber, a straw fiber, a bamboo shoot shell fiber, an eulaliopsis binata fiber and a bamboo shoot shell fiber. The above plant fibrous wastes are readily available, and have high fiber content and good water absorption, so that they can not only play a good supporting role in the use process, but also can further improve the water absorption effect of the cat litter.

**Bacteriostat**

A bacteriostat may quickly kill bacteria, fungi and other microorganisms, so that the cat litter is not easy to grow bacteria during use. In an embodiment of the present application, the bacteriostat comprises a mesoporous solid base, wherein a mesopore refers to a pore having a size ranging from 2-50nm. The mesoporous solid base may be used as a catalyst, which has advantages of high activity and mild reaction conditions, and may quickly adsorb oxygen and water vapor in the air on the surface of the mesoporous solid base, catalyzes oxygen and water vapor to generate hydroxyl radicals, oxygen radicals, peroxyl radicals and other oxidative particles whose oxidation rate is several orders of magnitude higher than the oxidation rate of ozone, so as to quickly kill bacteria, fungi and other microorganisms.

In some embodiments of the present application, the mesoporous solid base may be selected from metal oxide and/or metal hydroxide. Moreover, the metal may be an alkali metal or an alkaline earth metal.

Exemplary, the mesoporous solid base may be at least one of silicon oxide, zirconia, aluminum oxide, magnesium hydroxide, calcium oxide, strontium oxide, barium oxide, and hydrotalcite.

In some embodiments of the present application, the bacteriostat may comprise at least one of nano-oxide, a solid oxychloride, sorbic acid, and a sorbate, in addition to the mesoporous solid base.

Exemplary, the nano-oxide is selected from at least one of nano zinc oxide particles, nano titanium dioxide particles and nano cerium oxide particles. The sorbate is selected from at least one of sodium sorbate and potassium sorbate. The solid oxychloride was chosen from chlorine dioxide.

**Deodorant**

A deodorant may remove ammonia and ammonium ions in pet excreta, thereby improving the air quality in the feeding environment and preventing rancidity, reducing the occurrence of pet respiratory diseases, and facilitating the healthy growth of pets. In addition, the deodorant also has other effects, such as refreshing and stopping bleeding, avoiding the pet's body temperature drop caused by the wet environment, and reducing the incidence of diarrhea and other diseases.

In some embodiments of the present application, the deodorant is selected from at least one of clay, a resin, a plant essential oil, and allophane.

In these embodiments described above, the clay may be a modified clay selected from attapulgite and/or nano-montmorillonite modified with amide compounds.

In some alternative embodiments of the present application, the modified clay is attapulgite modified with amide compounds.

In particular, the amide compounds may be polyacrylamide, which, as a linear water-soluble polymer flocculant, has the same number of amide groups as acrylamide units on the molecular chain. The amide groups are highly polar, easy to form hydrogen bonds and highly reactive.

The attapulgite is a magnesium aluminosilicate-rich clay mineral with fibrous or chain-like structure, has a crystal structure comprising a series of crystal channels, and a large specific surface area, which makes it have strong physical adsorption ability. In addition, due to crystal defects and vacancies in the crystal structure, the surface of attapulgite is negatively charged and thus has a strong ion-exchange adsorption capacity.

In addition, the surface of the attapulgite contains a large number of silica hydroxyl groups, which have a strong affinity for organic matter, and may generate organic-inorganic composites with some specific groups through grafting reaction, thus giving new properties to the attapulgite.

In some embodiments of the present application, the acrylamide may be grafted on the surface of silicon alkylation attapulgite, to form a polyacrylamide/attapulgite composite material. The surface of the composite material contains a large number of amide group, and has a strong adsorption ability for harmful heavy metal ions and ammonium ions. Moreover, the attapulgite itself has a strong adsorption ability, and may adsorb harmful gases in the environment to improve the air quality in the breeding environment and prevent rancidity, thus reducing the occurrence of pet respiratory diseases and facilitating the healthy growth of pets.

In these embodiments described above, the polyacrylamide/attapulgite composite material is prepared by the follow method.

(1) 100 ml toluene, 1 ml water and 3.0g attapulgite are successively added into a three-neck flask (dried at 105°C for 2h), and then 3mL $\gamma$-(methacryloxy) propyl trimethoxysilane (KH-570) is added while stirring. Ultrasonic treatment is performed at 40-45 °C for 40min.

(2) The reaction is carried out at 45-50°C for 4h under stirring condition to obtain a reaction product. The obtained reaction product is filtered and separated, and then washed successively with toluene, absolute ethanol and deionized water to remove excess KH-570. The product is dried at 105°C to obtain silylated attapulgite, which is ground and sieved through 200 mesh for use.

(3) 100mL toluene and 2.0g silylated attapulgite are successively added into a three-nuked flask, and then a certain amount of acrylamide and azodiisobutyronitrile (AIBN) are successively added. The reaction is carried out for several hours at a certain temperature under the protection of nitrogen.

(4) After the reaction finished, the obtained product is filtered and separated, and then washed successively with toluene, absolute ethanol and deionized water to remove excess polyacrylamide, to obtain the polyacrylamide/attapulgite composite material. The composite material is dried at 105 °C, ground and sieved through 200 mesh for use.

In other embodiments of the present application, the deodorant may be selected as a super absorbent resin, which contains hydrophilic functional groups such as carboxyl group, sulfonic group, hydroxyl group, and amide group, and may absorb tens to thousands of times of its own weight of water. After contacting with water or aqueous solution, the super absorbent resin starts to swell to form a hydrogel. The hydrogel may absorb ammonia, so as to have obvious deodorant effect. Exemplary, the super absorbent resin may be polyacrylic acid. The deodorant may also zeolite powder.

**Adsorbent**

An adsorbent is used to remove highly toxic, teratogenic and carcinogenic metabolites produced by fungi or molds. Mycotoxins may cause growth retardation, decreased immunity and organ dysfunction in pets.

In some embodiments of the present application, the adsorbent is selected from at least one of an activated carbon, a mixture of water and sodium calcium aluminosilicate, diatomite, esterified glucomannan and cholestyramine

**Binder**

A binder allows the components to be bonded together to form a granular substance during the granulation process of the cat litter. In some embodiments of the present application, the binder is selected from at least one of whey protein, sodium alginate, zein, sodium-based bentonite, carboxymethyl cellulose, sodium polyacrylate, pregelatinized starch and jelly glue.

**Water absorbent**

A water absorbent has excellent water absorption capacity and the ability to retain water. In some embodiments of the present application, the water absorbent is selected from at least one of an acrylate polymer, an acrylonitrile copolymer, a protein, a thermosetting resin and a barrier resin.

Exemplary, the acrylate polymer may be polyacrylate or starch-acrylate polymer. The acrylonitrile copolymer may be starch-acrylonitrile graft copolymer or acrylamide-acrylonitrile-acrylic acid ternary copolymer. The protein may be casein. The thermosetting resin may be polyamide epichlorohydrin. The barrier resin may be polyvinyl alcohol.

In some embodiments of the present application, the cat litter comprises the following components: 2-6 parts by weight of the bacteriostat; and/or, 3-30 parts by weight of the deodorant; and/or, 2-25 parts by weight of the adsorbent; and/or, 5-40 parts by weight of the binder; and/or, 3-85 parts by weight of the water absorbent; and/or, 26-60 parts by weight of the water.

In these embodiments described above, the content of each component is further optimized so that the cat litter has a better antibacterial effect, facilitating the healthy growth of pets.

In some embodiments of the present application, the cat litter also comprises the following component: a fiber softener, wherein the fiber softener is 1-18 parts by weight relative to 100 parts by weight of the plant fibrous waste.

In these embodiments described above, the fiber softener may improve the softness of the cat litter, so as to make the cat litter soft and comfortable.

In some embodiments of the present application, the fiber softener is selected from at least one of fatty acid compounds, fatty acid ester compounds, glycerol compounds, amide compounds and silicone oil compounds.

Exemplary, the fiber softener may be a mixture of one or more of mono-stearate glycerides and distearate glycerides, stearic acid, oleamide, glycerol, trialkyl phosphate, aminoalkyl silicone fluid and pentaerythritol stearate.

In some embodiments of the present application, the cat litter also comprises the following component: a fresher, wherein the fresher is 1-13 parts by weight relative to 100 parts by weight of the plant fibrous waste.

In these embodiments described above, the fresher may absorb the odor in the pet's excreta and further improve the air quality in the feeding environment, facilitating the healthy growth of pets.

In some embodiments of the present application, the fresher is selected from an applewood fiber. The applewood fiber has a slight sweet smell in processing, is a natural fruit wood without stimulation, green and environmental protection, fresh and dust-free.

In some embodiments of the present application, the cat litter comprises the following components: 3-6 parts by weight of the bacteriostat; and/or, 6-12 parts by weight of the deodorant; and/or, 3-4 parts by weight of the adsorbent; and/or, 11-17 parts by weight of the binder; and/or, 5-9 parts by weight of the water absorbent; and/or, 41-56 parts by weight of the water; and/or, 2-6 parts by weight of the fiber softener; and/or, 4-9 parts by weight of the fresher.

In these embodiments described above, the content of each component is further optimized so that the cat litter not only has a better antibacterial effect, but also improves the softness of the cat litter, facilitating the healthy growth of pets.

The present application also provides a method for preparing the cat litter in any one of the above embodiments, comprising steps of:

S10: mixing a plant fibrous waste, water and a part of a bacteriostat, a deodorant, an adsorbent, a binder and a water absorbent to obtain a first mixture;

S20: granulating the first mixture to obtain a first particle;

S30: mixing the remaining part of the bacteriostat, the deodorant, the adsorbent, the binder and the water absorbent to form a second mixture, and coating the first particle with the second mixture to obtain a second particle; and

S40: sieving and drying the second particle to obtain the cat litter.

In the technical solution of the present application, the components of the cat litter are readily available, easy to be prepared, and have low preparation cost.

In some embodiments of the present application, the step S10 comprises the following steps:

S11: the plant fibrous waste was sorted and dried sequentially to obtain the desired components of the cat litter;

S12: the dried plant fibrous waste was evenly sprayed with water and mixed with stirring to obtain a mixture;

S13: a part of the binder, the bacteriostat, the deodorant, the adsorbent were added to the mixture obtained in step S12, and performed stirring for 5-10min;

S14: a part of the water absorbent was added to the mixture obtained in step S13, and performed stirring for 3-5min.

In some embodiments of the present application, the step S20 comprises the following step:
S21: the mixture obtained in step S14 was slowly added to a mold of a granulator, and the first particle was obtained after extrusion.

In some embodiments of the present application, the mold has a compression ratio of 0.5-2.5. The compression ratio in the above range may improve the porosity of the first particle as well as the degree of formability and integrity, and may also achieve a balance between the degree of formability and integrity. High porosity may not only make the cat litter have better foot softness and water absorption effect, but also make each cat litter absorb water faster and more fully, so as to save the amount of the cat litter and prevent leakage of cat urine. High formability and integrity result in lower levels of crushed particles and dust in the cat litter.

In some embodiments of the present application, the step S30 comprises the following step:
S31: the remaining parts of the bacteriostat, the deodorant, the adsorbent, the binder and the water absorbent were added to the first particle under stirring condition to coat the first particle, performed stirring for 3-5min after completing the coating, to obtain a second particle.

In some embodiments of the present application, the step S40 comprises the following step:
S41: the second particle was sieved through a 40-mesh filter, and the second particle on the filter was transferred to a drying equipment for drying treatment at a temperature of 65-75°C for 15-25min, and the particle was controlled to have a moisture content of 12-18% to obtain a cat litter.

In some embodiments of the present application, a method for preparing the cat litter comprises the following steps:

(1) a plant fibrous waste and a fresher were sorted, dried, and mixed well to obtain a mixed fiber;

(2) a fiber softener was added evenly to the mixed fiber obtained in step (1), stirred for 5-10min, and then performed standing for 20-30min;

(3) the mixed fiber obtained in step (2) was evenly sprayed with water and mixed evenly with stirring;

(4) a part of a bacteriostat, a deodorant, an adsorbent, a binder and a water absorbent were mixed and added to the mixture obtained in step (3), and performed stirring for 5-10min;

(5) a part of the water absorbent was added to the mixture obtained in step (4), and performed stirring for 3-5min;

(6) the mixture obtained in step (5) was slowly added to a mold of a granulator, and the first particle was obtained after extrusion, wherein the mold has a compression ratio of 0.5-2.5;

(7) the water was heated to 50-65°C, and then a pregelatinized starch solution with a concentration of 2% was added to the heated water under the condition of stirring at a speed of 600-1400r/min for 5-10min, to obtain a pregelatinized starch solution;

(8) the first particle was added to a powder wrapping machine, and the pregelatinized starch solution obtained in step (7) was added thereto under the condition of stirring, and then the remaining parts of the bacteriostat, the deodorant, the adsorbent, the binder and the water absorbent were added to the powder wrapping machine to coat the first particle, and then performed stirring for 3-5min to obtain a second particle; and

(9) the second particle was sieved through a 40-mesh filter, and the second particle on the filter was transferred to a drying equipment for drying treatment at a temperature of 65-75°C for 15-25min, and the particle was controlled to have a moisture content of 12-18% to obtain a cat litter.

The cat litter and the preparation method thereof of the present application are described in detail below by specific examples.

**Example 1**

This example provides a method for the preparing a cat litter, comprising the following steps:

(1) a plant fibrous waste was sorted and dried sequentially to obtain the desired components of the cat litter;

(2) the dried plant fibrous waste was evenly sprayed with water and mixed with stirring to obtain a mixture;

(3) 1.5 parts of a binder, 0.3 parts of a bacteriostat, 0.5 parts of a deodorant, and 0.8 parts of an adsorbent were added to the mixture obtained in step (2), and performed stirring for 5min;

(4) 1 part of a water absorbent was added to the mixture obtained in step (3), and performed stirring for 3min;

(5) the mixture obtained in step (4) was slowly added to a mold of a granulator, and the first particle was obtained after extrusion, wherein the mold has a compression ratio of 2.5;

(6) the first particle was added to a powder wrapping machine, and the remaining parts of the bacteriostat, the deodorant, the adsorbent, the binder and the water absorbent were added to the powder wrapping machine under stirring condition to coat the first particle, and then performed stirring for 3min to obtain a second particle; and

(7) the second particle was sieved through a 40-mesh filter, and the second particle on the filter was transferred to a drying equipment for drying treatment at a temperature of 65°C for 15min, and the particle was controlled to have a moisture content of 18% to obtain a cat litter.

**Example 2**

This example provides a method for the preparing a cat litter, comprising the following steps:

(1) a plant fibrous waste and a fresher were sorted, dried, and mixed well to obtain a mixture;

(2) a fiber softener was added evenly to the mixture obtained in step (1), stirred for 8min, and then performed standing for 25min;

(3) the mixture obtained in step (2) was evenly sprayed with water and mixed evenly with stirring;

(4) 4 parts of a binder, 1 part of a bacteriostat, 2.5 parts of a deodorant, and 1.5 parts of an adsorbent were mixed and added to the mixture obtained in step (3), and performed stirring for 8min;

(5) 2 parts of a water absorbent were added to the mixture obtained in step (4), and performed stirring for 4min;

(6) the mixture obtained in step (5) was slowly added to a mold of a granulator, and the first particle was obtained after extrusion, wherein the mold has a compression ratio of 1.5;

(7) the water was heated to 65°C, and then a pregelatinized starch solution with a concentration of 2% was added to the heated water under the condition of stirring at a speed of 900r/min for 7min, to obtain a pregelatinized starch solution;

(8) the first particle was added to a powder wrapping machine, and the pregelatinized starch solution obtained in step (7) was added thereto under the condition of stirring, and then the remaining parts of the bacteriostat, the deodorant, the adsorbent, the binder and the water absorbent were added to the powder wrapping machine to coat the first particle, and then performed stirring for 4min to obtain a second particle; and

(9) the second particle was sieved through a 40-mesh filter, and the second particle on the filter was transferred to a drying equipment for drying treatment at a temperature of 70°C for 20min, and the particle was controlled to have a moisture content of 15% to obtain a cat litter.

**Example 3**

This example provides a method for the preparing a cat litter, comprising the following steps:

(1) a plant fibrous waste and a fresher were sorted, dried, and mixed well to obtain a mixture;

(2) a fiber softener was added evenly to the mixture obtained in step (1), stirred for 10min, and then performed standing for 30min;

(3) the mixture obtained in step (2) was evenly sprayed with water and mixed evenly with stirring;

(4) 8 parts of a binder, 3 parts of a bacteriostat, 4.5 parts of a deodorant, and 2 parts of an adsorbent were mixed and added to the mixture obtained in step (3), and performed stirring for 10min;

(5) 4.5 parts of a water absorbent were added to the mixture obtained in step (4), and performed stirring for 5min;

(6) the mixture obtained in step (5) was slowly added to a mold of a granulator, and the first particle was obtained after extrusion, wherein the mold has a compression ratio of 0.5;

(7) the water was heated to 60°C, and then a pregelatinized starch solution with a concentration of 2% was added to the heated water under the condition of stirring at a speed of 1400r/min for 10min, to obtain a pregelatinized starch solution;

(8) the first particle was added to a powder wrapping machine, and the pregelatinized starch solution obtained in step (7) was added thereto under the condition of stirring, and then the remaining parts of the bacteriostat, the deodorant, the adsorbent, the binder and the water absorbent were added to the powder wrapping machine to coat the first particle, and then performed stirring for 5min to obtain a second particle; and

(9) the second particle was sieved through a 40-mesh filter, and the second particle on the filter was transferred to a drying equipment for drying treatment at a temperature of 75°C for 25min, and the particle was controlled to have a moisture content of 12% to obtain a cat litter.

**Comparative Example 1**

This example provides a method for the preparing a cat litter, comprising the following steps:

(1) a plant fibrous waste was sorted and dried,

(2) a fiber softener was added evenly to the plant fibrous waste obtained in step (1), stirred for 5min, and then performed standing for 20min;

(3) the mixture obtained in step (2) was evenly sprayed with water and mixed evenly with stirring;

(4) 0.2 part of a bacteriostat, 8 part of a binder, and 4.5 parts of a water absorbent were mixed and added to the mixture obtained in step (3), and performed stirring for 5min;

(5) the mixture obtained in step (4) was slowly added to a mold of a granulator, and the first particle was obtained after extrusion, wherein the mold has a compression ratio of 3.0;

(6) the water was heated to 50°C, and then a pregelatinized starch solution with a concentration of 2% was added to the heated water under the condition of stirring at a speed of 600r/min for 5min, to obtain a pregelatinized starch solution;

(7) the first particle was added to a powder wrapping machine, and the pregelatinized starch solution obtained in step (6) was added thereto under the condition of stirring, and then the remaining parts of the bacteriostat, the binder and the water absorbent were added to the powder wrapping machine to coat the first particle, and then performed stirring for 3min to obtain a second particle; and

(8) the second particle was sieved through a 40-mesh filter, and the second particle on the filter was transferred to a drying equipment for drying treatment at a temperature of 65°C for 15min, and the particle was controlled to have a moisture content of 18% to obtain a cat litter.

The parts by weight of each component of the cat litter in Examples 1-3 and Comparative example 1 are shown in Table 1.

Table 1

| Example | Components | Specific components | Parts by weight |
|---|---|---|---|
| Example 1 | Plant fibrous waste | Bagasse fiber | 90 |
| | | Straw fiber | 10 |
| | Bacteriostat | Mesoporous solid base of silicon oxide | 1 |
| | | Nano-Titania | 1 |
| | Deodorant | Allophane | 3 |
| | Adsorbent | Diatomite | 2 |
| | Binder | Carboxymethyl cellulose | 5 |
| | Water absorbent | Polyvinyl alcohol | 3 |
| | Water | Water | 26 |
| Example 2 | Plant fibrous waste | Bagasse fiber | 87 |
| | | Bamboo shoot shell fiber | 13 |
| | Bacteriostat | Mesoporous solid base of alumina | 2 |
| | | Potassium sorbate | 1 |
| | Deodorant | Polyacrylamide/attapulgite | 4 |
| | | super absorbent resin | 2 |
| | Adsorbent | A mixture of water and sodium calcium aluminosilicate | 3 |
| | Binder | Sodium alginate | 11 |
| | Water absorbent | Starch-acrylate polymer | 5 |
| | Water | Water | 41 |
| | Fresher | Applewood fiber | 4 |
| | Fiber softener | Aminoalkyl silicone fluid | 2 |
| Example 3 | Plant fibrous waste | Bagasse fiber | 89 |
| | | Bamboo fiber | 11 |
| | Bacteriostat | Mesoporous solid base of zirconia | 5 |
| | | Nano zinc oxide | 1 |
| | Deodorant | Modified montmorillonite | 7 |
| | | Super absorbent resin | 4 |
| | Adsorbent | Esterified glucomannan | 4 |
| | Binder | Pregelatinized starch | 17 |

(continued)

| Example | Components | Specific components | Parts by weight |
|---|---|---|---|
|  | Water absorbent | Starch-acrylonitrile graft copolymer | 9 |
|  | Water | Water | 56 |
|  | Fresher | Applewood fiber | 9 |
|  | Fiber softener | Glycerol | 4 |
|  |  | Mono-stearate glycerides and disterate glycerides | 2 |
| Comparative example 1 | Plant fibrous waste | Bagasse fiber | 89 |
|  |  | Bamboo fiber | 11 |
|  | Bacteriostat | Nano zinc oxide | 1 |
|  | Binder | Pregelatinized starch | 17 |
|  | Water absorbent | Starch-acrylonitrile graft Copolymer | 9 |
|  | Water | Water | 56 |
|  | Fiber softener | Glycerol | 4 |
|  |  | Mono-stearate glycerides and disterate glycerides | 2 |

**Test example**

Performance tests were performed on the cat litter in Examples 1-3 and Comparative example 1. The test results are shown in Table 2, and the specific performance tests are as follows:

**Strength of agglomeration**

The sample absorbs water and condenses to form an agglomerated sample. The agglomerated sample is naturally dropped from a certain height, and its agglomerated strength is judged by its broken state. If the strength of agglomeration is greater than or equal to 75%, the sample is qualified.

Test steps: The agglomerated sample is randomly selected, weighed as weight of agglomeration $m_1$ (weight of agglomeration refers to the weight of the sample after water absorption and condensation), and then dropped freely from a height of 50cm to a marble or other inelastic table. The largest piece of the cat litter agglomeration is picked up and weighed as $m_2$. The strength of agglomeration is calculated by the following formula:

$$Q = m_1/m_2 \times 100\%$$

wherein:

Q - strength of agglomeration, in %;
$m_1$ - weight of agglomeration, in grams; and
$m_2$ - weight of the largest piece of agglomeration, in grams.

**Water absorption rate**

If the sample has a water absorption rate of 66% or more, it is considered qualified. The equipment used for measuring the water absorption rate should be as follows:

a) a balance with a sensory specification of 0.01g;
b) a acid burette of 25mL; and
c) a pipette of 20mL.

Test steps: 20g cat litter is laid in the sample basin to form the cat litter with a thickness of about 8-10cm. 20mL of 1% sodium chloride solution with a temperature of 36-40°C is sucked with the pipette and transferred to the acid bureter. The acid bureter is adjusted to be about 3cm away from the sample plane. When the acid bureter is opened, all the solution flows into the sample within 30s. After 60s, the agglomerated sample is taken out, and weighed as $m_1$ on the balance with a sensitivity specification of 0.01g. Three groups of samples are tested using this method, and then the average value is calculated. The formula for calculating water absorption rate is as follows:

$$X = 20/(m_1-20) \times 100\%$$

wherein:

X - water absorption rate, in %; and
$m_1$ - weight of agglomeration, in grams.

**Ammonia concentration**

In a closed environment, the ammonia meter is used to measure the residual ammonia concentration after the absorption of a certain ammonia solution. If the ammonia concentration is less than or equal to 20mg/m$^3$, the sample is qualified.

Test steps: The odor source of ammonia solution with a concentration of 5% is prepared. At a constant temperature of 23-27°C, the material cup and the test sample in it are placed in a square and sealed box with a length of 30cm, a width of 20cm, and a height of 10cm. The ammonia meter is placed at 10cm from the material cup. 20mL of the prepared odor source is sucked with a pipette, flowed downstream to the center of the material cup. After the box is sealed for 3min, the value is read as ammonia concentration.

**Bacteria, mould and aflatoxin contents**

The content of coliform is determined according to GB/T 18869. If the content of coliform is less than or equal to 300MPN/100g, the sample is considered qualified.

The content of salmonella is determined according to GB/T 13091.

The total mold content is determined according to GB/T 13092. If the total mold content is less than or equal to $4\times10^4$CFU/g, the sample is considered qualified.

The content of aflatoxin B1 is determined according to GB/T 17480. If the content of aflatoxin B 1 is less than or equal to 20μg/kg, the sample is considered qualified.

Table 2

| Performance indicators | Example 1 | Example 2 | Example 3 | Comparative example 1 |
| --- | --- | --- | --- | --- |
| Strength of agglomeration (%) | 78 | 87 | 95 | 72 |
| Water absorption rate (%) | 72 | 120 | 200 | 68 |
| Ammonia concentration (mg/m$^3$) | 20 | 3 | 3 | 35 |
| Mould (CFU/g) | 50 | 10 | 3 | $5\times10^4$ |
| Coliform (MPN/100g) | 30 | 15 | 5 | 350 |
| Salmonella (abs/25g) | abs | abs | abs | abs |
| Aflatoxin B$_1$ (μg/kg) | 1.5 | 0.5 | 0.1 | 30 |
| Note: abs/25g means that if no Salmonella (abs) is detected in 25g sample, the sample is qualified. | | | | |

Table 2 shows that the cat litter applied in this application not only has excellent antibacterial effect, but also has good strength of agglomeration, water absorption rate and deodorant effect.

Any equivalent transformation of structure or process made by using the contents of the specification and the drawings of this application, or directly or indirectly applied in other relevant technical fields, shall be included in the scope of this application.

**Claims**

1. A cat litter which is **characterized by** comprising the following components:

    100 parts by weight of a plant fibrous waste,
    1-7 parts by weight of a bacteriostat, wherein the bacteriostat comprises a mesoporous solid base;
    1-34 parts by weight of a deodorant,
    1-27 parts by weight of an adsorbent,
    1-47 parts by weight of a binder,
    1-94 parts by weight of a water absorbent, and
    20-80 parts by weight of water.

2. The cat litter according to claim 1, **characterized in that**,

    the bacteriostat is 2-6 parts by weight, and/or
    the deodorant is 3-30 parts by weight, and/or
    the adsorbent is 2-25 parts by weight, and/or
    the binder is 5-40 parts by weight, and/or
    the water absorbent is 3-85 parts by weight, and/or
    the water is 26-60 parts by weight.

3. The cat litter according to claim 1 or 2, **characterized in that**, the cat litter further comprises the following component:
   a fiber softener, wherein the fiber softener is 1-18 parts by weight.

4. The cat litter according to claim 3, **characterized in that**, the cat litter further comprises the following component:
   a fresher, wherein the fresher is 1-13 parts by weight.

5. The cat litter according to claim 4, **characterized in that**,

    the bacteriostat is 3-6 parts by weight, and/or
    the deodorant is 6-12 parts by weight, and/or
    the adsorbent is 3-4 parts by weight, and/or
    the binder is 11-17 parts by weight, and/or
    the water absorbent is 5-9 parts by weight, and/or
    the water is 41-56 parts by weight, and/or
    the fiber softener is 2-6 parts by weight, and/or
    the fresher is 4-9 parts by weight.

6. The cat litter according to claim 4 or 5, **characterized in that**, the fiber softener is selected from at least one of fatty acid compounds, fatty acid ester compounds, glycerol compounds, amide compounds and silicone oil compounds; and/or
   the fresher is selected from an applewood fiber.

7. The cat litter according to claim 1, **characterized in that**, the mesoporous solid base is selected from a metal oxide and/or a metal hydroxide.

8. The cat litter according to claim 7, **characterized in that**, the metal oxide is selected from an alkali metal oxide and/or an alkaline earth metal oxide; and
   the metal hydroxide is selected from an alkali metal hydroxide and/or an alkaline earth metal hydroxide.

9. The cat litter according to claim 7, **characterized in that**, the plant fibrous waste is selected from at least one of a bagasse fiber, a bamboo fiber, a giant fungus grass fiber, a straw fiber, a bamboo shoot shell fiber, an eulaliopsis binata fiber and a bamboo shoot shell fiber; and/or

    the bacteriostat comprises at least one of nano-oxide, a solid oxychloride, sorbic acid and a sorbate; and/or
    the deodorant is selected from at least one of clay, a resin, a plant essential oil, and allophane; and/or
    the adsorbent is selected from at least one of an activated carbon, a mixture of water and sodium calcium aluminosilicate, diatomite, esterified glucomannan and cholestyramine; and/or

the binder is selected from at least one of whey protein, sodium alginate, zein, sodium-based bentonite, carboxymethyl cellulose, sodium polyacrylate, pregelatinized starch and jelly glue; and/or
the water absorbent is selected from at least one of an acrylate polymer, an acrylonitrile copolymer, a protein, a thermosetting resin and a barrier resin.

10. The cat litter according to claim 9, **characterized in that**, the nano-oxide is selected from at least one of nano zinc oxide particles, nano titanium dioxide particles and nano cerium oxide particles;

the sorbate is selected from at least one of sodium sorbate and potassium sorbate;
the solid oxychloride is selected from chlorine dioxide; and
the clay is a modified clay selected from attapulgite and/or nano-montmorillonite modified with amide compounds.

11. A method for preparing the cat litter according to any one of claims 1-10, **characterized in that**, the method comprises steps of:

mixing a plant fibrous waste, water and a part of a bacteriostat, a deodorant, an adsorbent, a binder and a water absorbent to obtain a first mixture;
granulating the first mixture to obtain a first particle;
mixing the remaining part of the bacteriostat, the deodorant, the adsorbent, the binder and the water absorbent to form a second mixture, and coating the first particle with the second mixture to obtain a second particle; and
sieving and drying the second particle to obtain the cat litter.

12. The method according to claim 11, **characterized in that**, a compression ratio in the granulating step is 0.5-2.5.

**Amended claims in accordance with Rule 137(2) EPC.**

1. A cat litter which is **characterized by** comprising the following components:

100 parts by weight of a plant fibrous waste selected from at least one of a bagasse fiber, a bamboo fiber, a giant fungus grass fiber, a straw fiber, an eulaliopsis binata fiber and a bamboo shoot shell fiber,
1-7 parts by weight of a bacteriostat selected from at least one of a mesoporous solid base, nano-oxide, a solid oxychloride, sorbic acid and a sorbate, wherein the bacteriostat comprises a mesoporous solid base selected from at least one of silicon oxide, zirconia, aluminum oxide, magnesium hydroxide, calcium oxide, strontium oxide, barium oxide, and hydrotalcite;
1-34 parts by weight of a deodorant selected from at least one of clay, a resin, a plant essential oil, and allophane,
1-27 parts by weight of an adsorbent selected from at least one of an activated carbon, a mixture of water and sodium calcium aluminosilicate, diatomite, esterified glucomannan and cholestyramine,
1-47 parts by weight of a binder selected from at least one of whey protein, sodium alginate, zein, sodium-based bentonite, carboxymethyl cellulose, sodium polyacrylate, pregelatinized starch and jelly glue,
1-94 parts by weight of a water absorbent selected from at least one of an acrylate polymer, an acrylonitrile copolymer, a protein, a thermosetting resin and a barrier resin, and
20-80 parts by weight of water.

2. The cat litter according to claim 1, **characterized in that**, the bacteriostat is 2-6 parts by weight.

3. The cat litter according to claim 1 or 2, **characterized in that**, the deodorant is 3-30 parts by weight.

4. The cat litter according to any one of claims 1-3, **characterized in that**, the adsorbent is 2-25 parts by weight.

5. The cat litter according to any one of claims 1-4, **characterized in that**, the binder is 5-40 parts by weight.

6. The cat litter according to any one of claims 1-5, **characterized in that**, the water absorbent is 3-85 parts by weight.

7. The cat litter according to any one of claims 1-6, **characterized in that**, the water is 26-60 parts by weight.

8. The cat litter according to any one claims 1-7, **characterized in that**, the cat litter further comprises the following component:

a fiber softener selected from at least one of fatty acid compounds, fatty acid ester compounds, glycerol compounds, amide compounds and silicone oil compounds, wherein the fiber softener is 1-18 parts by weight.

9. The cat litter according to claim 8, **characterized in that**, the cat litter further comprises the following component: a fresher selected from an applewood fiber, wherein the fresher is 1-13 parts by weight.

10. The cat litter according to claim 9, **characterized in that**,

> the bacteriostat is 3-6 parts by weight,
> the deodorant is 6-12 parts by weight,
> the adsorbent is 3-4 parts by weight,
> the binder is 11-17 parts by weight,
> the water absorbent is 5-9 parts by weight,
> the water is 41-56 parts by weight,
> the fiber softener is 2-6 parts by weight, and
> the fresher is 4-9 parts by weight.

11. The cat litter according to claim 10, **characterized in that**, the nano-oxide is selected from at least one of nano zinc oxide particles, nano titanium dioxide particles and nano cerium oxide particles;

> the sorbate is selected from at least one of sodium sorbate and potassium sorbate;
> the solid oxychloride is selected from chlorine dioxide; and
> the clay is a modified clay selected from attapulgite and/or nano-montmorillonite modified with amide compounds.

12. A method for preparing the cat litter according to any one of claims 1-11, **characterized in that**, the method comprises steps of:

> mixing a plant fibrous waste, water and a part of a bacteriostat, a deodorant, an adsorbent, a binder and a water absorbent to obtain a first mixture;
> granulating the first mixture to obtain a first particle;
> mixing the remaining part of the bacteriostat, the deodorant, the adsorbent, the binder and the water absorbent to form a second mixture, and coating the first particle with the second mixture to obtain a second particle; and
> sieving and drying the second particle to obtain the cat litter.

13. The method according to claim 12, **characterized in that**, a compression ratio in the granulating step is 0.5-2.5.

S10

Mixing a plant fibrous waste, water and a part of a bacteriostat, a deodorant, an adsorbent, a binder and a water absorbent to obtain a first mixture

S20

Granulating the first mixture to obtain a first particle

S30

Mixing the remaining part of the bacteriostat, the deodorant, the adsorbent, the binder and the water absorbent to form a second mixture, and coating the first particle with the second mixture to obtain a second particle

S40

Sieving and drying the second particle to obtain the cat litter

Fig. 1

Europäisches
Patentamt

European
Patent Office

Office européen
des brevets

# EUROPEAN SEARCH REPORT

**Application Number**

EP 23 17 9693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 045 904 A (XINMAN INNOVATION SHENZHEN TECH CO LTD) 29 June 2021 (2021-06-29) * examples * ----- | 1-12 | INV. A01K1/015 |
| A | CN 106 614 018 A (QINGDAO PENGTONG RUIDE ELECTRIC TECH CO LTD) 10 May 2017 (2017-05-10) * examples * ----- | 1-12 | |

**TECHNICAL FIELDS SEARCHED (IPC)**

A01K

The present search report has been drawn up for all claims

| Place of search | Date of completion of the search | Examiner |
|---|---|---|
| The Hague | 20 November 2023 | Blas, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

EP 4 454 457 A1

## ANNEX TO THE EUROPEAN SEARCH REPORT
## ON EUROPEAN PATENT APPLICATION NO.

EP 23 17 9693

This annex lists the patent family members relating to the patent documents cited in  the above-mentioned European search report.
The members are as contained in the European Patent Office EDP file on
The European Patent Office is in no way liable for these particulars which are merely given for the purpose of information.

20-11-2023

| Patent document cited in search report | | Publication date | Patent family member(s) | Publication date |
|---|---|---|---|---|
| CN 113045904 | A | 29-06-2021 | NONE | |
| CN 106614018 | A | 10-05-2017 | NONE | |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 18869 T
- GB 13091 T
- GB 13092 T
- GB 17480 T